Europäisches Patentamt

European Patent Office

Office européen des brevets

(11) Publication number: **0 091 275**
**A2**

## (12) EUROPEAN PATENT APPLICATION

(21) Application number: **83301800.5**

(22) Date of filing: **30.03.83**

(51) Int. Cl.³: **B 29 C 17/07**
**B 65 D 1/02**

(30) Priority: **01.04.82 US 364563**
**24.09.82 US 423358**

(43) Date of publication of application:
**12.10.83 Bulletin 83/41**

(84) Designated Contracting States:
**AT BE CH DE FR GB LI NL SE**

(71) Applicant: **CONTINENTAL PLASTIC BEVERAGE**
**BOTTLES, INC.**
**51 Harbor Plaza**
**Stamford Connecticut 06904(US)**

(72) Inventor: **Clark, Richard E.**
**15 Courtland**
**Merrimack New Hamsphire 03054(US)**

(74) Representative: **Palmer, Roger et al,**
**PAGE, WHITE & FARRER 5 Plough Place New Fetter**
**Lane**
**London EC4A 1HY(GB)**

(54) **Improved plastic container and method of forming same.**

(57) This relates to blow molded containers, and particularly to the formation of blow molded containers formed of a plastic material which is subjectable to a high degree of biaxial orientation for maximum strength. At least two containers are formed in each blow molding operation with each container having throughout the stress areas thereof a high degree of biaxial orientation. A container may be in the form of a bottle having an as formed open bottom which is closed by a metal end unit seamed in place. On the other hand, the intermediately formed article may be in the form of a plurality of hollow containers arranged in circumferentially adjacent relation and directly secured to each other and to the bottom and top panels. Other containers will have open mouths closed by conventional closures including metal end units which are seamed to the container body or by closure caps which may be releasably interlocked with the neck finish of the container in several known modes. In every instance the containers are formed with a minimum of scrap.

FIG. 5.

## PLASTIC CONTAINER
## AND METHOD OF FORMING SAME

This invention relates in general to new and useful improvements in blow molded plastic containers, and more particularly to the simultaneous forming of two containers as part of an intermediate article of manufacture wherein both containers have a high degree of biaxial orientation.

In the past, multiple containers have been formed by clamping an extruded tube in a multiple cavity blow mold, piercing the center part of the extruded tube with a blow needle, and then simultaneously blowing the two end portions of the extruded tube in a conventional manner to define two separate and apart containers joined by a central ring portion which is readily cut therefrom. Such containers are deficient in that while there has been the desired degree of hoop stretching, there has been no axial elongation and therefore, for all practical purposes, the plastic material of such containers is oriented only in the hoop direction and there is little or no biaxial orientation as is desired for shape maintaining containers.

In accordance with this invention, it is proposed to begin with an injection molded preform having an open neck portion by which the preform and the resultant blow molded intermediate article may be readily handled and through which the necessary blowing gas may be introduced. Such preform is both shorter than and of a smaller diameter than the resultant blow molded intermediate article, and thereby, except in the open neck portion, there is a high degree of biaxial orientation.

In accordance with this invention, there is blow molded in the customary manner an intermediate article which includes two individual containers joined by a center ring portion which is of a different diameter from that of adjacent portions of the containers whereby the open ends of the blow molded containers, when severed from the ring member, are provided with seaming flanges at their open ends, the seaming flanges having a high degree of biaxial orientation wherein cracking during the seaming of a metal end unit thereto does not occur.

A feature of the invention is a method of simultaneously forming two blow molded plastic containers, the method comprising the steps of providing a tubular preform having an open end and a closed end, placing the preform in a blow mold, and introducing a blowing gas into the preform through the preform open end and blow molding the preform to an intermediate shape defining at least two containers each having an open end defined by a radially outwardly directed seaming flange with the flanges being generally in opposed relation.

Also, generally speaking, the invention particularly relates to an intermediate article of manufacture comprising an integral blow molded hollow plastic member having an open neck portion and at least two separate containers integrally joined together.

In accordance with the invention, the containers may be in axial alignment joined by a center ring, or may be aligned transversely of the axis of the blow molded article. Further, the articles may be disposed in circumferentially adjacent relation with the blow molded article having flat ends which adjoin to top and bottom edges of the container.

A particularly preferred container is in the form of a blow molded plastic container comprising a tubular body having one end open and a second end defined by a shoulder joined to a tubular neck, and a metal bottom seamed to the body and closing the open one end.

A wide variety of container configurations is feasible in accordance with the invention, and several only will be illustrated. Basically, the two containers may be axially aligned with each other and with the open neck portion of the preform, or may be axially aligned with each other but transversely of the axis of the preform. In one embodiment of the invention, a conventional bottle is blow molded except that it has no bottom, and in accordance with this invention a metal bottom unit will be seamed thereto in a conventional manner. Other containers will be open mouth jar-like members which may be provided with metal end units seamed thereto or which may have threads so as to receive closure caps.

With the above and other objects in view that will hereinafter appear, the nature of the invention will be more clearly understood by reference to the following detailed description, the appended claims, and the several views illustrated in the accompanying drawings.

IN THE DRAWINGS:

Figure 1 is an axial sectional view through a preform utilized in accordance with this invention.

Figure 2 is an axial sectional view taken through a blow mold having positioned therein the preform of Figure 1 preparatory to a blow molding operation.

Figure 3 is an axial sectional view through a blow molded intermediate article formed by blow molding the preform of Figure 1 in the mold of Figure 2.

Figure 4 is an exploded axial sectional view of the intermediate article showing the same separated into two containers and a scrap ring member.

Figure 5 is an axial sectional view of one of the containers of Figure 4 after the bottom thereof has been closed with a metal bottom end unit.

Figure 6 is an axial sectional view through the other of the containers of Figure 4 after the open mouth thereof has been closed utilizing a metal end unit.

Figure 7 is an axial sectional view taken through a slightly modified preform.

Figure 8 is an axial sectional view taken through a blow mold having positioned therein the preform of Figure 7 prior to a blow molding operation.

Figure 9 is an axial sectional view through an intermediate article blow molded from the preform of Figure 7 in the blow mold of Figure 8.

Figure 10 is a bottom view of the intermediate article of Figure 9.

Figure 11 is an exploded bottom view of the intermediate article of Figure 10 with the two blow molded containers separated from the central ring member which becomes scrap.

Figure 12 is a sectional view through one of the containers of Figure 11, and shows the same closed by means of a metal end unit.

Figure 13 is an axial sectional view through a blow molded container similar to that of Figure 6 wherein the container is provided with a reduced diameter, externally threaded mouth for receiving a screw threaded closure cap.

Figure 14 is an enlarged fragmentary elevational view of an upper portion of a modified form of the jar of Figure 13 wherein the mouth neck portion is provided with closure cap retaining lugs.

Figure 15 is an enlarged fragmentary elevational view of still another form of open mouth container neck finish having a peripheral bead wherein the container may be closed by a snap-on closure cap.

Figure 16 is a top perspective view of a hollow blown article formed in accordance with this invention wherein each side of the article is in the form of a container.

Figure 17 is a transverse sectional view taken through a conventional blow mold and shows the article of Figure 1 in the blow mold.

Figure 18 is a top plan view of the article of Figure 1, and shows further the arrangement of the containers and the manner in which they are separated from the top and bottom of the hollow member and from each other.

Figure 19 is a horizontal sectional view taken through a modified form of the hollow member formed in accordance with this invention.

Figure 20 is a horizontal sectional view taken through still another form of hollow member formed in accordance with this invention.

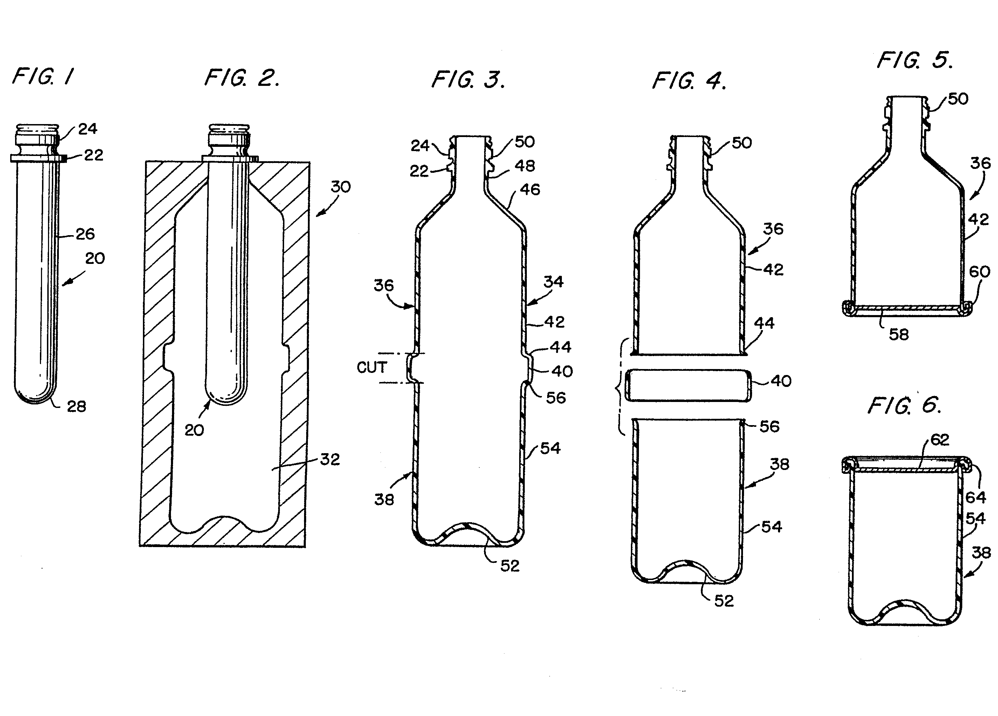

Referring now to the drawings in detail, reference is first made to Figures 1-6 wherein there is illustrated a typical embodiment of the invention.

In Figure 1 there is illustrated a conventional type of injection molded preform 20 which is provided with the usual carrier flange 22 and an externally threaded neck finish 24. The preform 20 will have a generally cylindrical body 26 and a closed bottom 28 which normally will generally be in the form of a hemisphere.

In Figure 2 there is illustrated a conventional type of longitudinally split blow mold in which the preform 20 of Figure 1 is mounted, the blow mold being generally identified by the numeral 30. The blow mold 30 is provided with a cavity 32 which is axially elongated and which is configured to effect the blow molding of the preform 20 into an axially elongated generally cylindrical member which is best illustrated in Figure 3 and is identified by the numeral 34. The member 34 is an intermediate article of manufacture and is configured so as to define an upper container 36 and a lower container 38 joined by an annular ring member 40. Most specifically, it will be seen that the upper container 36 includes an open bottom cylindrical body 42 joined to the ring member 40 by a radially outwardly directed annular flange 44. The upper end of the body 42 is provided with a shoulder 46 which

0091275

terminates in a neck 48 which is open and which has an external neck finish 50 in accordance with the injection molded neck finish of the preform 20 including the threads 24 and shoulder or collar 22.

The container 38 is provided, in the illustrated embodiment, with a bottom 52 which is of the so-called champagne bottom configuration so as to withstand internal pressures. The container 38 also includes a cylindrical body 54 which has an open upper end and which terminates in a radially outwardly directed flange 56 which corresponds to the flange 44 of the container 36 and is integrally joined to the ring member 40.

As is schematically illustrated in Figure 3, the flanges 44 and 56 are separated from the ring member 40 in any desired conventional manner so that the containers 36 and 38 become separated from the ring member 40 with the ring member 40 becoming trim scrap. With respect to the container 36, the portion of the flange 44 remaining integral with the body 42 becomes a lower seaming flange. In a like manner, the portion of the flange 56 remaining integral with the body 54 of the container 38 becomes an integral seaming flange.

As is shown in Figure 5, the container 36, which in the illustrated embodiment of the invention is a bottle, has the open bottom thereof closed by means of a metal end unit 58 which is sealed to the body 42 by means of a conventional folded seam 60, such as a double seam, incorporating the seaming flange 44. The top of the container 36 may be filled through the neck thereof and then closed in the conventional manner.

At this time it is pointed out that when the container 36 is to be packaged with a beverage under high internal pressure, as in the instance of carbonated beverages, and the container 36 is made in accordance with the illustrations of Figures 1-4, it has been found that the forming of the end unit 58 of steel and the double seaming thereof to the body 42 is less costly than the cost of the plastic material normally required to form a bottom integral with the body 42 that will withstand the relatively high internal pressures on the order of 80 p.s.i. and above.

Referring now to Figure 6, it will be seen that the container 38 is illustrated with a conventional type of metal end unit 62 which is secured to the container body 54 utilizing the seaming flange 36 by way of a conventional seam, such as a double seam 64.

With respect to the end unit 62, it is to be understood that it will vary with the product and may be a liquid which can be poured therefrom, will have only a small removable panel portion, or it may be of the full opening type. It is also feasible that the end unit could be of the conventional type having a plastic window which may be cut out for dispensing purposes, or the end unit 62 could be of a two-piece construction and include a conventional outer ring and a removable plug member as in the case of paint cans and the like. It is also feasible in the case of the full opening end unit to provide a suitable sealable cover which will snap into interlocking engagement with the seam 64 in a known manner.

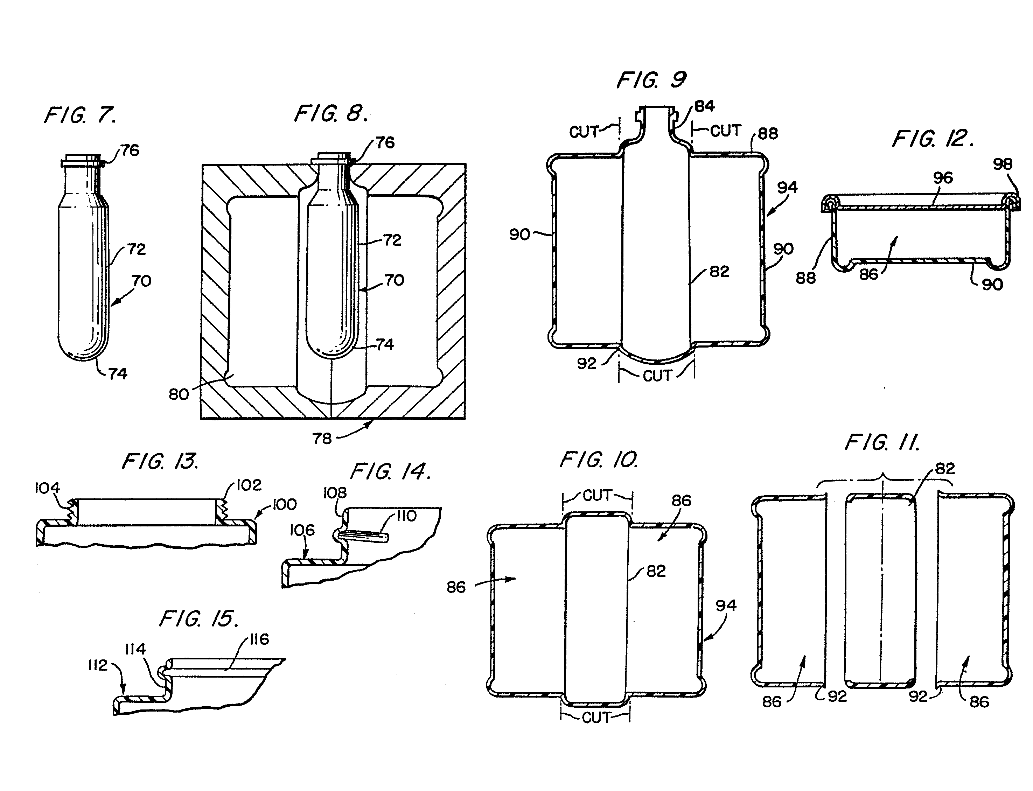

Reference is now made to Figures 7-12 wherein there is illustrated a different embodiment of the invention. In Figure 7 there is illustrated a preform 70 which is similar to the preform 20, but wherein the threaded neck portion has been eliminated. The preform 70 will include the usual body 72 having a closed lower end 74 and is provided at its upper end with a support collar or shoulder 76 to facilitate handling of the preform and the article which is blow molded therefrom.

In Figure 8 there is illustrated one-half of a conventional split blow mold 78 which has a cavity 80 therein defining an article to be blow molded from the preform 70, the article being best shown in Figures 9 and 10.

The cavity 80 will be so configurated wherein the blown article will include a central ring member 82 from which a neck portion 84 projects in the original axial direction of the preform. At each side of the ring member 84 there is formed containers 86 with the containers 86 being preferably identical but not necessarily so. Each container 86 will include a body 88 having at one end thereof a bottom 90 which may be of the illustrated recessed type. The opposite end of the body 88 is open and has radially extending therefrom an annular flange 92.

The blow molded article illustrated in Figures 9 and 10 is an intermediate article of manufacture and is generally identified by the numeral 94. After it has been removed from the mold, it is cut along circular cut lines in the manner schematically shown in Figures 9 and 10 to define a central element in the form of the ring member 82, which becomes scrap, and the two containers 86. The formation of the containers 86 is now complete.

Reference is now made to Figure 12 wherein there is shown the manner in which a typical container 86 may be closed by means of a metal end unit 96 which is secured to the body 88 by way of a conventional seam, preferably a double seam 98. It is to be understood that the seaming flanges 92 are utilized in forming the seam 98.

It is to be understood that the end unit 96 may be of an easy opening type or other type as described with respect to the end unit 62 of Figure 6.

It is also pointed out here that the containers 36 and 86 need not be restricted to containers which are closed by metal end units which are double seamed in place. In Figure 13 there is illustrated a modified container 100 which has a reduced diameter neck 102 that is provided with external threads 104 for receiving a conventional screw threaded closure cap. In Figure 14 there is illustrated a similar container 106 which has a neck finish 108 incorporating conventional lugs 110 for cooperation with somewhat similar lugs on the closure cap.

In Figure 15 there is illustrated a container 112 which also has a reduced diameter neck finish 114 which is provided with a continuous annular ring 116 beneath which a conventional closure cap of the snap-on type may be readily interlocked.

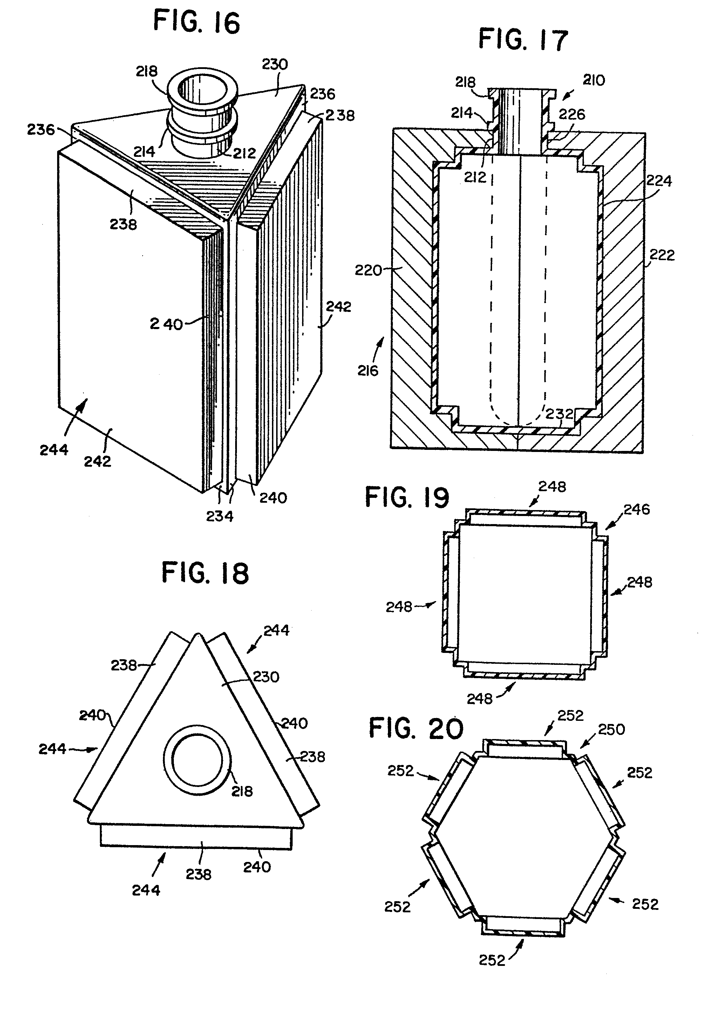

In accordance with Figures 16-20, there is provided a tubular preform 210 of the conventional type. The preform 210 may be of circular cross section or it may be a specially formed preform. In any event, it has a tubular portion 212 which includes a lower shoulder 214 for engagement with the top of a mold, such as mold 216, and an upper shoulder 218 to facilitate handling of the preform and presentation thereof into the mold 216.

The mold 216 is of a split construction including halves 220, 222 and is provided with a cavity 224 which includes a tubular upper portion 226 which generally fits the tubular upper portion of the preform 210. The cavity of the mold 216 is generally triangular in cross section so as to form a blow molded member, such as that shown in Figure 16, the blow molded member being generally identified by the numeral 228.

The blow molded member 228, depending upon the product to which it is to be packaged in resultant containers, may be formed of PET or similar biaxially orientable plastic materials. The hollow member 228 includes a top wall 230 having extending upwardly therefrom the preform tubular neck 212 from which the shoulders 214 and 218 project. The hollow member 228 also includes a bottom wall 232. The top wall 230 and the bottom wall 232 in the illustrated member 228 are triangular in outline. As a result, the member 228 is provided with three sides 234.

Each of the sides 234, in the preferred embodiment of the invention, is generally rectangular and includes a peripheral base portion 236 which are joined

0091275

together and to the top wall 232 and the bottom wall 234. The base portion 236 has projecting generally radially outwardly therefrom four side walls 238 and 240 which, in the illustrated embodiment of the member 228, are arranged in rectilinear pattern. The walls 238, 240 are further joined by an outer wall 242.

It is to be understood that each of the sides 234 forms a container and the three containers of the hollow member 228 are formed by cutting the top wall 230 and the bottom wall 232 from the tubular member. Then, as shown in Figure 18, the sides 234 are separated from one another along their lines of juncture by separate cuts. The net result is for each of the side walls 234 there is a rectangular tray-like container which is generally identified by the numeral 244. Each container 244 has a bottom wall formed by the wall 242, upstanding side walls formed by walls 238, 240 and a peripheral flange formed by the base 236. The peripheral flange 236 may, of course, have sealed thereto a cover for the container 244, the cover not being shown and forming no part of this invention.

Referring now to Figure 19, it will be seen that in lieu of the hollow member 228 being of a triangular cross section so as to form only three containers 244, there may be a hollow member configuration which is foursided, as shown in Figure 19, the hollow member being identified by the numeral 246. The four individual containers 248 formed by the four sides of the member 246 may be of the same size as the container 244, or may differ in size as desired.

In a like manner, the number of sides of the hollow member formed by blow molding may be increased to six as shown with respect to the hollow member 250 of Figure 20. Once again each side of the resultant hollow member will be in the form of a container 252.

It is to be understood that the most economical cross section of a hollow member blow molded in accordance with this invention will be that of a regular polygram where all of the sides are of the same size.

Although only several preferred embodiments of the invention have been specifically illustrated and described herein, it is to be understood that minor variations may be made in the process and resultant articles, without departing from the spirit and scope of the invention as defined by the appended claims.

0091275

CLAIMS

1. A method of simultaneously forming two blow molded plastic containers, said method comprising the steps of providing a tubular preform having an open end and a closed end, placing said preform in a blow mold, and introducing a blowing gas into said preform through said preform open end and blow molding said preform to an intermediate shape defining at least two containers each having an open end defined by a radially outwardly directed seaming flange with said flanges being generally in opposed relation.

2. A method according to claim 1 wherein said seaming flanges of said containers are spaced apart by an intermediate integral ring member.

3. A method according to claim 2 wherein said ring member is removed to separate said containers.

4. A method according to claim 2 wherein said preform open end remains constant and projects from said ring member.

5. A method according to claim 2 wherein said preform open end remains constant and forms a mouth of one of said containers.

6. A method according to claim 2 wherein said ring member has an axis extending in the same general direction as an original axis of said preform.

7. A method according to claim 2 wherein said ring member has an axis extending generally normal to the original axis of said preform.

8. A method according to claim 1 wherein said preform open end forms one end of one of said containers, and the open end of said one container is the bottom of said one container.

9. A method according to claim 1 wherein the number of containers is in excess of two, said containers are in circumferentially adjacent relation, and circumferentially adjacent ones of said seaming flanges are in direct connection with each other.

10. An intermediate article of manufacture comprising an integral blow molded hollow plastic member having an open neck portion and at least two separate containers integrally joined together.

11. An intermediate article according to claim 10 wherein said open neck portion has an axis disposed generally coaxially of said containers.

12. An intermediate article according to claim 10 wherein said open neck portion has an axis disposed normal to the axis of said containers.

13. An intermediate article of manufacture wherein said containers are joined together by a central ring member.

14. An intermediate article according to claim 13 wherein said open neck portion has an axis disposed normal to the axis of said containers.

15. An intermediate article according to claim 10 wherein said containers have open tops arranged in opposed relation.

16. An intermediate article according to claim 10 or 13 wherein one of said containers has an open bottom, and said open neck portion forms part of said one container.

17. An intermediate article of manufacture according to claim 10 wherein there are more than three of said containers, said containers are in adjacent circumferential relation, and said containers are joined to essentially flat top and bottom walls, and said top wall carries said open neck portion.

18. A blow molded plastic container comprising a tubular body having one end open and a second end defined by a shoulder joined to a tubular neck, and a metal bottom seamed to said body and closing said open one end.

19. A blow molded plastic container according to claim 18 wherein said container is particularly adapted for the packaging of beverages under pressures on the order of 90 p.s.i. and above.

20. A blow molded plastic container according to claim 18 wherein said tubular neck is of an injection molded construction.

FIG. 5.

FIG. 6.

FIG. 4.

FIG. 3.

FIG. 2.

FIG. 1

FIG. 7.

FIG. 8.

FIG. 9.

FIG. 12.

76
72
70
74

76
72
70
74
80
78

CUT
84
CUT
88
94
82
90
90
92
CUT

96
98
88
86
90

FIG. 13.

FIG. 14.

FIG. 10.

FIG. 11.

104
102
100
106

108
110

CUT
86
82
86
94
CUT

82
86
92
92
86

FIG. 15.

112
114
116

2/3

0091275

0091275

## FIG. 16

## FIG. 17

## FIG. 19

## FIG. 18

## FIG. 20